(19) Europäisches Patentamt
European Patent Office
Office européen des brevets

(11) EP 1 848 775 B1

(12) **FASCICULE DE BREVET EUROPEEN**

(45) Date de publication et mention de la délivrance du brevet:
**25.02.2009 Bulletin 2009/09**

(21) Numéro de dépôt: **05825983.9**

(22) Date de dépôt: **09.12.2005**

(51) Int Cl.:
***C08L 83/04** (2006.01)* ***C09J 183/04** (2006.01)*
***C08K 5/54** (2006.01)*

(86) Numéro de dépôt international:
**PCT/FR2005/003088**

(87) Numéro de publication internationale:
**WO 2006/067294 (29.06.2006 Gazette 2006/26)**

(54) **COMPOSITION ELASTOMERE SILICONE, ADHESIVE, MONOCOMPOSANTE ET RETICULABLE PAR POLYADDITION**

DURCH POLYADDITION VERNETZBARE EINKOMPONENTIGE SILIKONELASTOMERKLEBSTOFFZUSAMMENSETZUNG

ADHESIVE SILICON ELASTOMER SINGLE-COMPONENT COMPOSITION CROSSLINKABLE BY POLYADDITION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.12.2004 FR 0413640**

(43) Date de publication de la demande:
**31.10.2007 Bulletin 2007/44**

(73) Titulaire: **Bluestar Silicones France**
**69486 Lyon Cedex 03 (FR)**

(72) Inventeurs:
- **POUCHELON, Alain**
  **F-69330 Meyzieu (FR)**
- **BLANC-MAGNARD, Delphine**
  **F-69007 Lyon (FR)**
- **GEORGE, Catherine**
  **F-69130 Ecully (FR)**
- **ZANANDREA, Fabio**
  **F-69003 Lyon (FR)**

(56) Documents cités:
**EP-A- 0 850 996**
**WO-A-03/037987**
**US-A- 5 567 752**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 848 775 B1

## Description

Le domaine général de l'invention est celui des composition élastomères silicones vulcanisables à chaud ("Room Temperature Vulcanising" : RTV ou "Liquid Silicone Rubber" : LSR), par des réactions de polyaddition (hydrosilylation), impliquant des polyorganosiloxanes (POS) porteurs de motifs ≡Si-H et des POS porteurs d'insaturation(s) éthylénique(s) et/ou acétylénique(s), ci-après dénommés POS porteurs de motifs ≡Si-[insaturation], en présence d'un système catalytique comprenant au moins un catalyseur métallique (de préférence à base de platine) et au moins un inhibiteur.

La présente invention a donc pour objet une nouvelle composition Elastomère Silicone Adhésive (ESA), auto-adhérente, monocomposante, réticulable à chaud par polyaddition selon une cinétique élevée, ayant une bonne tenue thermique à l'état réticulé.

La présente invention vise également l'application de cette composition Elastomère Silicone Adhésive (ESA), dans la fabrication de colle ou de joints in situ tels que des joints flués, des joints profilés sur pièce et des joints injectés ou surmoulés. Il peut s'agir notamment d'une colle permettant l'assemblage (à chaud) de substrats divers, par exemple en métal, en verre ou en plastique, les substrats pouvant être dans la même matière ou dans une matière différente.

Dans ces applications, il convient de disposer d'une composition élastomère réticulable, dotée de propriétés rhéologiques étudiées pour qu'elle puisse être aisément mise en forme et/ou applicable sur des substrats à assembler et/ou à jointer (rhéologie adaptée), d'une part, et pour qu'elle soit apte à conserver la forme qu'on leur a donnée au moins pendant le temps nécessaire à la réticulation qui permet de fixer définitivement la mémoire de la forme visée. On peut qualifier les pâtes de silicone élastomère réticulable dans cet état rhéologique, de coulantes ou pompables. Un tel comportement rhéologique est particulièrement bienvenu dans les applications de collage, de formation de joints in situ, de moulage, et d'estampage/tampographie, entre autres. Dans le cas de pièces à coller en textile, cette rhéologie permet d'éviter une imprégnation trop importante du tissu par la colle.

Toujours en ce qui concerne le collage, mais cette fois en particulier dans le domaine de l'électronique (pour l'assemblage des composants électroniques), il est notamment tout à fait souhaitable que :

■ la colle ESA ait une rhéologie adaptée aux opérations de dépôt et d'assemblage exécutées à de hautes cadences, et plus précisément qu'elle permette notamment de déplacer (ou manipuler) les pièces assemblées avant la prise de la colle (réticulation) sans que cela n'entraîne de décalage indésirable des pièces assemblées l'une par rapport à l'autre ;
■ la colle ESA ait une cinétique rapide de réticulation à chaud et donc compatible avec les cadences élevées de fabrication ;
■ la colle ESA soit thermiquement stable à l'état réticulé (propriété indispensable notamment pour le collage de porte de four) ;
■ la colle ESA soit auto-adhérente sur les substrats à assembler ;
■ et enfin que cette colle ESA soit commode à manipuler.

Sur ce dernier point, il est clair qu'une formulation monocomposant stable au stockage l'emporte nettement sur une formulation bicomposant de polyaddition à chaud, qui reste pourtant celle qui est la plus courante en pratique. Après réticulation, la colle est suffisamment stable thermiquement pour pouvoir être appliquée pour le collage.

Pour tenter d'atteindre ces caractéristiques rhéologiques, il a été proposé d'utiliser des thixotropants permettant d'épaissir, dans une juste mesure, les compositions élastomères silicones, sans affecter pour autant leur malléabilité, leur fluidité nécessaire à leur manipulation et à leur mise en forme. Parmi les thixotropants classiques utilisables, on peut citer les systèmes à base d'amine (chaîne polymère de préférence silicone greffé par des fonctions amines primaires ou amines secondaires) ou de polyglycols. Ces thixotropants classiques n'ont pas permis jusqu'à maintenant d'épaissir de manière satisfaisante toutes les formulations silicones polyaddition et ouvrir ainsi d'intéressantes perspectives dans des applications pour lesquelles cette caractéristique est fondamentale. Il est connu d'épaissir les élastomères vulcanisables à chaud (EVC) au peroxyde, à l'aide de PolyTétraFluoroEthylène (PTFE) commercialisée sous la marque téflon®.

Par ailleurs, le brevet français FR-B-2 791 994 divulgue une composition élastomère silicone, réticulable par polyaddition, dotée d'un comportement théologique non coulant, autoadhérente, et du type de celles comprenant des polyorganosiloxanes (POS) porteurs de motifs ≡Si-alcényle en $C_2$-$C_6$ et de motifs ≡Si-H, du polytétrafluoroéthylène (PTFE : téflon®), à titre d'agent thixotropant. Les applications visées pour cette composition sont : moulage, estampage, tampographie, réalisation de joints in situ et collage notamment de textile.

Cette composition se présente avantageusement sous la forme d'un bicomposant formé par des parties $P_1$ et $P_2$ soigneusement mélangées. $P_1$ contient de la résine POS de structure $MM^{Vi}DD^{Vi}Q$ faite de: $(CH_3)_3SiO_{0,5}$ (motifs M), $(CH_3)_2ViSiO_{0,5}$ (motifs $M^{Vi}$), $(CH_3)_2SiO$ (motifs D) et $SiO_2$ (motifs Q); un POS : PolyDiMéthylSiloxane à motifs $(CH_3)_2ViSiO_{0,5}$, une charge de terre de diatomées (CELITE® 350), de l'oxyde de magnésium en poudre, l'orthotitanate

de butyle qui est l'un des trois composants d'un promoteur d'adhérence, un catalyseur au platine métal sous la forme d'un complexe métallique, connu sous le nom de catalyseur de Karstedt. Une autre charge formée par un mélange poudreux à base de Téflon (Du-Pont, Résine T CN®) et de 50 quartz broyé (SIFRACO C-600). $P_2$ a la même composition que $P_1$, à l'exception du catalyseur et comporte en outre un poly(diméthyl) (hydrogénométhyl)siloxane, bloqué par des motifs $(CH_3)_2HSiO_{0,5}$ , un 2ème et un 3ème éléments du promoteur d'adhérence, respectivement : vinyltriméthoxysilane (VTMO) et glycidoxypropyltriméthoxysilane (GLYMO) et un inhibiteur à base d'éthynylcyclo-hexanol. Une fois les parties $P_1$ et $P_2$ mélangées, la stabilité de cette composition bicomposante à froid en atmosphère ambiante est limitée à quelques jours.

Dans un tel état de la technique, l'un des objectifs essentiels de la présente invention, est de fournir une composition élastomère silicone adhérente (ESA), autoadhérente, réticulable à chaud par polyaddition, dotée d'un comportement rhéologique performant et adapté à des cadences industrielles notamment pour ce qui concerne le collage, thermiquement stable, commode à manipuler et surtout se présentant sous la forme d'une formulation monocomposante.

Un autre objectif essentiel de l'invention est de fournir une composition ESA auto-adhérente, monocomposante, apte à réticuler rapidement à chaud par polyaddition, stable à température ambiante pendant de longues périodes (e.g. plusieurs semaines à plusieurs mois).

Un autre objectif essentiel de l'invention est de fournir une composition élastomère silicone adhérente (ESA), type polyaddition, et en particulier autoadhérente et qui puisse être obtenue de manière simple et économique.

Un autre objectif essentiel de la présente invention est de fournir un procédé d'application de la composition élastomère silicone adhérente (ESA), réticulable par polyaddition, en particulier autoadhérente-, dans le collage par exemple, outre de composants électroniques, de matériaux fibreux e.g. de textiles, notamment dans la sellerie.

Un autre objectif essentiel de la présente invention est de fournir un procédé d'application d'une composition élastomère silicone adhérente (ESA), réticulable à chaud et en particulier autoadhérente, dans la fabrication de joints in situ tels que des joints flués, des joints profilés en place et des joints injectés ou surmoulés.

Un autre objectif essentiel de la présente invention est de fournir une colle comprenant l'élastomère silicone adhérent (ESA), et en particulier autoadhérent.

Ces objectifs, parmi d'autres, sont atteints par la présente invention qui concerne, en premier lieu, une composition élastomère silicone, adhésive et réticulable à chaud par polyaddition (hydrosilylation), cette composition étant du type de celles comprenant :

- ♦ α/ au moins un PolyOrganoSiloxane (POS) porteur d'insaturation(s) éthylénique(s) et/ou acétylénique(s), {POS à motifs ≡Si-[insaturation]};
- ♦ β/ au moins un polyorganosiloxane (POS) porteur de motifs ≡Si-H;
- ♦ γ/ un système catalytique comportant :
    - ~ γ.**1** au moins un catalyseur métallique (de préférence à base de platine),
    - ~ γ.**2** et au moins un inhibiteur de réticulation,
- ♦ δ/ une charge ;
- ♦ ε/ au moins un promoteur d'adhérence ;
- ♦ ρl éventuellement au moins une résine POS ;
- ♦ λ/ éventuellement au moins un agent de tenue thermique ;
- ♦ φ/ éventuellement au moins un autre additif fonctionnel ;

caractérisée en ce qu'elle est monocomposante et en ce que inhibiteur de réticulation γ.**2** est sélectionné dans le groupe des alcools α-acétylénique, le ratio molaire métal du catalyseur sur inhibiteur est compris entre 1/50 et 1/1000.

Suivant un mode de réalisation préféré, l'inhibiteur de réticulation γ.**2** répond à la formule :

$$R - (R') C (OH) - C \equiv CH \qquad (I)$$

formule dans laquelle :

. R est un radical alkyle linéaire ou ramifié, ou un radical aryle comme par exemple un radical phényle ;

. R' est H ou un radical alkyle linéaire ou ramifié , ou un radical aryle comme par exemple radical phényle ;

les radicaux R, R' et l'atome de carbone situé en α de la triple liaison pouvant éventuellement former un cycle ;
le nombre total d'atomes de carbone contenu dans R et R' étant d'au moins 4, de préférence d'au moins 9 et plus préférentiellement encore se situant dans l'intervalle allant de 9 à 20.

Suivant un mode de réalisation plus préféré, l'inhibiteur de réticulation γ.**2** répond à la formule (I) précitée dans laquelle :

. R est un radical alkyle linéaire ou ramifié, ou un radical phényle ;
. R' est H ou un radical alkyle linéaire ou ramifié, ou un radical phényle ;

le nombre total d'atomes de carbone contenu dans R et R' se situant dans l'intervalle allant de 9 à 20.
Suivant un mode de réalisation encore plus préféré, l'inhibiteur de réticulation γ.**2** est choisi parmi les alcools α-acétyléniques présentant un point d'ébullition supérieur à 250°C.
Suivant un mode de réalisation tout spécialement préféré, l'inhibiteur de réticulation γ.**2** est choisi parmi les alcools α-acétyléniques suivants :

. le méthyl-3 dodécyne-1 ol-3 ;
. le triméthyl-3,7,11 dodécyne-1 ol-3 ;
. le diphényl-1,1 propyne-2 ol-3 ;
. l'éthyl-3 éthyl-6 nonyne-1 ol-3 ;
. le méthyl-3 pentadécyne-1 ol-3.

Ces alcools α-acétyléniques sont des produits du commerce.
Il est du mérite des inventeurs d'avoir procédé à cette sélection d'inhibiteurs spécifiques parmi la vaste famille des inhibiteurs de réaction d'hydrosilylation. Cette modalité inventive donne accès à des ESA de type RTV ou LSR, qui ont pour grand avantage d'être des formulations monocomposantes, stables au stockage, dotées d'un comportement rhéologique performant et adapté à des cadences industrielles notamment pour ce qui concerne le collage, commode à manipuler, et enfin économiques.
Les compositions ESA selon l'invention ont vocation à être utilisées à des fins d'assemblage et/ou pour assurer la protection des composants assemblés.
Sans que cela ne soit limitatif, il doit être indiqué que la réticulation à chaud de la composition ESA selon l'invention, s'entend à une température par exemple comprise entre 50 et 200°C, de préférence entre 80 et 150°C, en atmosphère ambiante.
Il s'agit naturellement d'un compromis temps/température que l'homme du métier pourra déterminer aisément selon la formulation considérée.
En ce qui concerne les ratios molaires métal du catalyseur sur inhibiteur, ils sont compris entre 1/50 et 1/1000, de préférence entre 1/100 et 1/500.
Les catalyseurs γ.**1** avantageusement utilisés dans le système catalytique γ de la composition selon l'invention, comprennent tous les catalyseurs utiles pour l'hydrosilylation de POS porteurs de motifs ≡Si-H et de POS porteurs de motifs ≡Si-[insaturation éthylénique ou acétylénique]. Il peut donc s'agir de composés du platine, du rhodium, de l'iridium, du nickel, du ruthénium et/ou du palladium. Il s'agit plus particulièrement de composés de l'iridium ou encore mieux du platine.
Le composé du platine peut être tout complexe du platine et d'un produit organique, e.g. ceux décrits dans les brevets US-B-3 159 601, US-B-3 159 602, US-B-3 220 972 et les brevets européens EP-A-0 057 459, EP-A-0 188 978 et EP-A-0 190 530, ou tout complexe du platine et d'organosiloxanes vinylés, e.g. ceux décrits dans les brevets US-B-3 419 593, US-B-3 715 334, US-B-3 377 432 et US-B-3 814 730.
On peut citer l'acide chloroplatinique, un acide chloroplatinique modifié par un alcool, ou encore un complexe de l'acide chloroplatinique avec une oléfine, un aldéhyde ou un vinylsiloxane entre autres. Le brevet US-B-2 823 218 divulgue un catalyseur d'hydrosilylation du type acide chloroplatinique et le brevet US-B-3 419 593 est relatif à des catalyseurs formés par des complexes d'acide chloroplatinique et d'organosilicone du type vinylsiloxane. Des complexes de platine et d'hydrocarbures utiles comme catalyseur d'hydrosilylation sont divulgués par les brevets US-B-3 159 601 et 3 159 602. Le brevet US-B-3 723 497 décrit un acétylacétonate de platine et le brevet US-B-3 220 972 a pour objet des catalyseurs à base d'alcoolate de platine.
Les catalyseurs γ.**1** plus spécialement sélectionnés conformément à l'invention sont des complexes platine/siloxane insaturés, en particulier les complexes platine/vinylsiloxane, notamment ceux obtenus par réaction entre un halogénure de platine et un matériau organosilicique insaturé tel qu'un silane insaturé ou un siloxane insaturé, e.g. selon l'enseignement de US-B-3 775 452 auquel l'homme du métier peut se reporter. L'invention s'applique de préférence à la solution ou complexe de Karstedt décrit plus haut.
Suivant une modalité particulière de l'invention, à la composition comprenant les POS α et β et le système catalytique selon l'invention, on peut rajouter un autre inhibiteur de réticulation, par exemple un composé de type maléate (US-B-4 256 870 et US-B-4 530 989) ou un composé de type acétylène dicarboxylate (US-B-4 504 645 et US-B-4 347 346).
Le système catalytique γ selon l'invention peut être simplement mélangé au POS α ou au POS β, ou au mélange

des POS $\alpha$ et $\beta$, avant ou après addition des autres ingrédients.

Outre ce système catalytique judicieusement sélectionné, la composition selon l'invention comprend aussi des POS $\alpha$ et $\beta$, qui peuvent être avantageusement choisi parmi les espèces suivantes :

♦ le ou les POS a comprennent des motifs siloxyles de formule :

$$R^1_nSiO_{4-n/2} \qquad (II)$$

et des motifs siloxyles de formule :

$$Z_xR^1_ySiO_{4-x-y/2} \qquad (III)$$

♦ le ou les POS $\beta$ comprennent des motifs siloxyles de formule :

$$R^1_nSiO_{4-n/2} \qquad (IV)$$

et des motifs siloxyles de formule :

$$HR^1_wSiO_{4-w/2} \qquad (V)$$

formules dans lesquelles les divers symboles ont la signification suivante :

⇒ les symboles $R^1$, identiques ou différents, représentent chacun un groupement de nature hydrocarbonée non hydrolysable, ce radical pouvant être :

* un radical alkyle ayant de 1 à 5 atomes de carbone et pouvant comporter de 1 à 6 atomes de chlore,
* des radicaux cycloalkyles ayant de 3 à 8 atomes de carbone et pouvant contenir de 1 à 4 atomes de chlore,
* des radicaux aryles, alkyaryles et ayant de 6 à 8 atomes de carbone et pouvant contenir de 1 à 4 atomes de chlore,
* des radicaux cyanoalkyle ayant de 3 à 4 atomes de carbone ; les groupes méthyle ; éthyle ; propyle ; isopropyle ; butyle ; isobutyle ; n-pentyle ; t-butyle ; chlorométhyle ; dichlorométhyle ; $\alpha$-chloroéthyle; $\alpha,\beta$-dichloroéthyle; $\beta$-cyanoéthyle ; $\gamma$-cyanopropyle, phényle : p-chlorophényle ; m-chlorophényle ; dichloro-3,5 phényle ; trichlorophényle ; tétrachlorophényle ; o-, p- ou m-totyle ; xylyles comme diméthyl-2, 3-phényle, diméthyl-3, 4-phényle, étant préférés ; les radicaux méthyle et phényle étant particulièrement préférés ;

⇒ les symboles Z, représentant un groupe alcényle en $C_2$-$C_6$ (de préférence vinyle) ;
⇒ n = un nombre entier égal à 0,1, 2 ou 3 ;
⇒ x = un nombre entier égal à 0,1, 2 ou 3 ;
⇒ y = un nombre entier égal à 0,1 ou 2 ;
⇒ la somme x + y se situe dans l'intervalle allant de 1 à 3,
⇒ w = un nombre entier égal à 0,1, 2 ou 3.

La nature du polyorganosiloxane et donc les rapports entre les motifs siloxyles (II) et (III) et la répartition de ceux-ci, sont comme on le sait, choisis en fonction du traitement de réticulation qui sera effectué sur la composition durcissable en vue de sa transformation en élastomère.

Comme exemples de motifs siloxyles de formule (III) constituant le POS, on peut citer : vinyldiméthylsiloxyle, vinylphénylméthylsiloxyle, vinylméthylsiloxyle et vinylsiloxyle.

Les motifs diméthylsiloxyle, méthylphénylsiloyle, diphénylsiloxyle, méthylsiloxyle et phénylsiloxyle sont des exemples de motifs siloxyle de formule (II) du POS.

Des exemples de POS sont des composés linéaires et cycliques comme :

o les diméthylpolysiloxanes à extrémités diméthylvinylsilyle,
o les copolymères (méthylvinyle)(diméthyl)polysiloxanes à extrémités triméthylsilyles,
o les copolymères(méthylvinyle)(diméthyle)polysiloxanes à extrémités diméthylvinylsilyles,
o ou les méthylvinylpolysiloxanes cycliques.

Les compositions polyorganosiloxanes selon l'invention sont monocomposantes, et stables pendant très longtemps à froid. Elles réticulent seulement à la chaleur (50-200°C, de préférence 80-150°C) par des réactions de polyaddition, essentiellement par réaction de groupements hydrogénosilylés sur des groupements alkénylsilylés.

Les polyorganosiloxanes entrant dans ces compositions sont en général constitués par des couples à base, d'une part, d'un polysiloxane linéaire, ramifié ou réticulé constitué de motifs (III) dans lesquels le reste Z représente un groupement alcényle en $C_2$-$C_6$ (de préférence vinyle), et où x est au moins égal à 1, éventuellement associés à des motifs (II), et d'autre part, d'un hydrogénopolysiloxane POS ≡SiH linéaire, ramifié ou réticulé constitué de motifs (III) dans lesquels le reste Z représente alors un atome d'hydrogène et où x est au moins égal à 1, éventuellement associés à des motifs (II).

Concernant le polyorganohydrogénosiloxane β, il est avantageusement choisi parmi les homopolymères et les copolymères linéaires, cycliques ou en réseau présentant en moyenne, par molécule, de préférence au moins 3 atomes d'hydrogène liés à des atomes de silicium différents et dont les radicaux organiques liés aux atomes de silicium sont choisis parmi les radicaux méthyle, éthyle ; 60% molaire au moins de ces radicaux (et de préférence la totalité de ces radicaux) étant des radicaux méthyle.

Selon une disposition avantageuse, le POS (β) est utilisé en quantité telle que le rapport molaire des fonctions hydrures du POS (β) sur les groupes vinyles POS (α) soient compris entre 1,1 et 4.

Des exemples de motifs siloxyles composant le POS (β) sont $H(CH_3)_2SiO_{1/2}$, $H(CH_3)SiO_{2/2}$, $H(C_6H_5)SiO_{2/2}$.

A titre d'exemples de POS (β), on peut citer :

- les diméthylpolysiloxanes à extrémités hydrogénodiméthylsilyles,
- les copolymères à motifs (diméthyle)-(hydrogénométhyle) polysiloxanes à extrémités triméthylsilyles,
- les copolymères à motifs (diméthyle)(hydrogénométhyle) polysiloxanes à extrémités hydrogénodiméthylsilyles,
- les (hydrogénométhyles)polysiloxanes à extrémités triméthylsilyles,
- les (hydrogénométhyles)polysiloxanes cycliques.

Ces POS a et β sont par exemple respectivement un polyorganovinylsiloxane et un polyorganohydrogénosiloxane. Les substituants organiques autres que les groupements réactifs vinyle et hydrogène, sont par exemple des méthyles ou des cyclohexyles. Les hydrogènes et les vinyles sont portés par des motifs siloxyles M = [$R_3$SiO-] et/ou D = [ -$(R)_2$SiO-] et/ou T = [ -(R)SiO- ].

Ces motifs M, D hydrogénés ou vinylés comportent respectivement chacun un ou plusieurs H ou Vinyle, de préférence un seul.

Le nombre de motifs ≡SiH ou ≡SiVi par molécule est de préférence supérieur ou égal à 2. Cela peut notamment représenter de 0,01% à 10 % (de préférence 0,1 à 2 %) de vinyle en poids pour le POS a et de 0,001 % à 5 % (de préférence 0,05 à 2 %) d'hydrogène en poids pour le POS β.

Des POS β appropriés sont :

o les polyméthylhydrogénosiloxanes à extrémités -$Si(CH_3)_3$,
o les polydiméthylsiloxanes à extrémités -$Si(CH_3)_2H$,
o les copolymères méthylhydrogénodiméthylsiloxanes à extrémités -$Si(CH_3)_2H$,
o les copolymères méthylhydrogénométhyloctylsiloxanes,
o et les polymères méthylhydrogénocyclosiloxanes.

En général, les POS α et β ont une masse moléculaire moyenne comprise entre $1.10^2$ et $1.10^7$ (g/mol).

Les compositions selon l'invention peuvent être de type RTV ou LSR. A titre indicatif, les compositions silicone RTV élastomères réticulables ont une viscosité $\eta_{RTV}$ à 25°C, telle que $\eta_{RTV} \leq 100\ 000$ mPa.s et les compositions silicones LSR élastomères réticulables ont une viscosité $\eta_{LSR}$, telle que :

$$100\ 000 \leq \eta_{LSR} \leq 2\ 000\ 000 \text{ mPa.s}$$

S'agissant des POS polyaddition mis en oeuvre dans les compositions selon l'invention (POS α - voire p), on en distingue plusieurs classes qui se différencient par leur viscosité et qui définissent des compositions élastomères silicones polyaddition de type RTV ou LSR.

Dans le cas des compositions RTV réticulant par des réactions de polyaddition, le (ou les) constituant(s) polyorganosiloxane(s) POS α et/ou ρ sont choisis parmi ceux porteur(s) de groupements alcényl-silylés, lesquels présentent avantageusement une viscosité η à 25°C :

$$200 \leq \eta \leq 200\,000 \text{ mPa.s.}$$

de préférence

$$500 \leq \eta \leq 100\,000 \text{ mPa.s.}$$

Dans le cas des compositions LSR réticulant par des réactions de polyaddition, le(ou les) POS $\alpha$ et/ou $\rho$ porteur (s) de groupements alcényl-silylés ont, par exemple une viscosité $\eta'$ à 25°C :

$$10\,000 \leq \eta' \leq 500\,000 \text{ mPa.s.}$$

Dans les cas des compositions polyorganosiloxanes RTV ou LSR, le (ou les) constituant(s) polyorganosiloxane (s) $\beta$ porteur(s) de groupements hydrogéno-silylés a(ont) généralement une viscosité à 25°C au plus égale à 10 000 mPa.s et, de préférence, comprise entre 5 et 1000 mPa.s.
Toutes les viscosités dont il est question dans le présent exposé correspondent à une grandeur de viscosité dynamique à 25°C mesurée, de manière connue en soi, à un gradient de vitesse de cisaillement représentatif de son utilisation.
Selon une variante, il est envisageable que la composition selon l'invention comprenne des mélanges de POS différents par leur nature et/ou par leur viscosité.
Plus précisément, la composition selon l'invention comprend :

- $\alpha$ - au moins un POS présentant, par molécule, au moins deux groupes alcényles, en $C_2$-$C_6$ liés au silicium ;
- $\beta$ - au moins un POS présentant, par molécule, au moins deux atomes d'hydrogène liés au silicium ;
- $\gamma$ - un système catalytique tel que défini supra ; - $\varepsilon$/ un promoteur d'adhérence de préférence binaire, et plus préférentiellement encore consistant en :

    ▲ $\varepsilon$.1 ▲ au moins un organosilane alcoxylé contenant par molécule, au moins un groupe alcényle en $C_2$-$C_6$,

    ▲ $\varepsilon$.2 ▲ au moins un composé organosilicé comprenant au moins un radical époxy ;

- $\delta$/ une charge :

    o $\delta$.**1** renforçante,
    o $\delta$.**2** non renforçante (semi-renforçante) ou de bourrage,
    o $\delta$.**3** ou microsphérique ;

- $\rho$/ éventuellement au moins une résine POS porteuse de motifs siloxyle T et/ou Q, éventuellement M et/ou D et de motifs siloxyle alcénylés de préférence vinylés de type $M^{Vi}$ et/ou $D^{Vi}$-, les résines de type M $M^{Vi}$ D $D^{Vi}$ Q étant tout particulièrement préférées ;
- $\lambda$/ éventuellement au moins un additif de tenue thermique ;
- $\varphi$/ éventuellement au moins un autre additif fonctionnel.

La charge renforçante $\delta$.**1** peut être choisie parmi les matières minérales, en particulier siliceuses.
Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 $\mu$m et une surface spécifique BET supérieure à 50 $m^2$/g, de préférence comprise entre 50 et 400 $m^2$/g, notamment entre 90 et 350 $m^2$/g.
La charge $\delta$.**2** non renforçante ou semi-renforçante (de bourrage) est avantageusement mise en oeuvre à titre de complément à la charge $\delta$.**1** de renfort. Cette charge $\delta$.**2** peut elle aussi être sélectionnée dans le groupe des matières minérales comprenant entre autres les charges siliceuses semi-renforçantes, telles que des terres de diatomées ou du quartz broyé.
$\delta$.**2** peut être aussi une matière minérale non siliceuse. Des exemples de charges non siliceuses utilisables seules ou en mélange sont le noir de carbone, le dioxyde de titane, l'oxyde de magnésium, l'oxyde d'aluminium, l'alumine hydratée, la vermiculite expansée, la vermiculite non expansée, le carbonate de calcium, l'oxyde de zinc, le mica, le

talc, l'oxyde de fer, le sulfate de baryum, la chaux éteinte, les terres de diatomées, le quartz broyé et le zircone broyé. Ces charges non siliceuses ont une granulométrie généralement comprise entre 0,001 et 300 μm et une surface BET inférieure à 100 $m^2/g$.

De façon pratique mais non limitative, les charges employées peuvent être un mélange de quartz et de silice.

Les charges peuvent être prétraitées par tout produit approprié, e.g. par des chlorosilanes, des cyclosiloxanes ou de l'hexaméthyldisilazane (HMDZ), ou d'autres composés organosiliciques habituellement employés pour cet usage, tels que des organochlorosilanes, des diorganocyclopolysiloxanes, des hexaorganodisiloxanes, des hexorganodisilazanes ou des diorganocyclopolysilazanes (brevets français FR-A-1 126 884, FR-A-1 136 885, FR-A-1 236 505, brevet anglais GB-A-1 024 234).

Ainsi, la charge siliceuse renforçante δ.**1** peut par exemple être traitée in situ par un agent de "compatibilisation", de préférence de type HMDZ, en présence du POS (α).

Par traitement in situ de la charge siliceuse, on entend la mise en présence de la charge et de l'agent de compatibilisation avec au moins une portion d'huile silicone polyorganosiloxane (α). De manière particulièrement préférée, cela consiste essentiellement à introduire de l'agent de compatibilisation (AC) en deux temps dans le milieu de préparation :

- d'une part, avant et/ou sensiblement simultanément à la mise en présence d'au moins une partie de l'huile silicone mise en oeuvre avec au moins une portion de la charge siliceuse utilisée, cette introduction d'AC (portion 1) s'opérant en une ou plusieurs fois et correspondant à une proportion inférieure ou égale à 8%, de préférence à 5% et, plus préférentiellement encore, à 3% en poids sec par rapport à la charge totale ;
- et d'autre part (portion 2), après cette mise en présence d'huile silicone/charge.

L'agent de compatibilisation de la portion (1) est ainsi choisi parmi des molécules qui satisfont à au moins deux critères :

- présenter une interaction forte avec la silice (liaisons hydrogène) et avec l'huile silicone environnante ;
- être elles-mêmes ou leurs produits de dégradation, aisément évacuables du mélange final par chauffage sous vide ou sous courant gazeux.

Les composés de bas poids moléculaire sont donc préférés.

L'agent de la portion (1) pourra être par exemple :

- un silazane, de préférence un disilazane, ou leurs mélanges, l'hexaméthyldisilazane (HMDZ) étant préféré et pouvant être associé au divinyltétraméthyldisilazane,
- un siloxane hydroxylé di- ou de préférence mono-fonctionnel,
- une amine telle que l'ammoniaque ou une alkylamine de bas poids moléculaire comme la diéthylamine,
- un acide organique de bas poids moléculaire comme les acides formique ou acétique.

Cet agent de la portion (1) est de préférence mis en oeuvre en présence d'eau.

Les agents de compatibilisation de la portion (2) peuvent être choisis parmi les différents silazanes et disilazanes rencontrés ci-dessus, pris seuls ou en mélanges entre eux, de préférence parmi les disilazanes, l'hexaméthyldisilazane associé ou non au divinyltétraméthyldisilazane étant particulièrement préféré.

Ce traitement in situ de silice par l'HMDZ est décrit en détail dans la demande de brevet WO-A-98/58997, qui est incorporée dans son intégralité dans le présent exposé par référence. Dans le cas où pareil traitement conduit à un pH basique, on peut ajouter dans la dispersion un neutralisant (H) tel que, par exemple, un acide faible (acide acétique ou phosphorique e.g.) ou une charge de silice telle que le quartz broyé.

La charge δ.**3** peut également être microsphérique, c'est à dire de préférence constituée de microsphères organiques expansibles comportant, comme cela est connu en soi, une paroi polymère renfermant un liquide ou un gaz. On provoque l'expansion de ces microsphères en les chauffant au delà du point de ramollissement du polymère et à une température suffisante pour vaporiser le liquide ou dilater convenablement le gaz, lequel peut être par exemple un alcane tel que isobutane ou isopentane. La paroi peut consister, comme cela est connu en soi, en polymères ou copolymères, par exemple préparés à partir de monomères chlorure de vinyle, chlorure de vinylidène, acrylonitrile, méthacrylate de méthyle ou styrène ou mélanges de polymères et/ou copolymères, par exemple, notamment de copolymères acrylonitrile/méthacrylonitrile, copolymère acrylonitrile /chlorure de vinylidène. Voir notamment US-B-3 615 972.

On peut les incorporer dans la composition indifféremment à l'état expansé ou avant leur expansion, que l'on pourra induire, par chauffage approprié, lors de la réticulation de la composition.

Avant leur expansion, les microsphères auront de préférence un diamètre compris entre 3 et 50 μm, plus particulièrement entre 5 et 30 μm.

On recherchera également un diamètre après expansion (in situ ou d'origine) compris notamment entre 10 et 150, en particulier entre 20 et 100 μm.

Ces charges pourront être présentes à raison :

~ de 5 à 30 %, de préférence de 15 à 25 % par rapport à la composition totale sans les microsphères, pour les charges renforçantes δ.**1**,
~ de 5 à 40 %, de préférence de 10 à 30 % de préférence de 2 à 10 % et plus préférentiellement de plus de 3 ou 4 % en poids par rapport à la composition totale, pour les charges semi-renforçantes ou de bourrage δ.**2**,
~ de 1 à 30 % en poids, de préférence de 2 à 10 % et plus préférentiellement de plus de 3 ou 4 % en poids par rapport à la composition totale pour la charge microsphérique δ.**3**.

Plus généralement, sur le plan quantitatif, les compositions selon l'invention renvoient à des proportions standards dans le domaine technique considéré, sachant que l'on doit tenir compte également de l'application visée.

La résine (ρ) est porteuse de motifs siloxyle alcénylés de préférence vinylés de type $M^{Vi}$ et $D^{Vi}$. Les substituants organiques des motifs siloxyle M, D, T de ces résines sont, par exemple, des radicaux méthyle, isopropyle, tertiobutyle, n-hexyle ou phényle. Ces résines silicone sont des POS ramifiés bien connus, dont les procédés de préparation sont décrits dans de très nombreux brevets.

Comme exemples de résines utilisables, on peut citer les résines MQ, MDQ, TD et MDT. Plus précisément, il peut s'agir en pratique d'une résine de type M $M^{Vi}$ D $D^{Vi}$ Q. Ces résines (ρ) peuvent être-solides ou liquides à température ambiante. Elles peuvent être en solution dans un solvant organique ou une huile silicone.

Il convient de noter que l'emploi d'une résine (ρ) est obligatoire quand la charge δ ne renferme pas de charge renforçante δ.**1**.

Le promoteur d'adhérence ε, comprend de préférence :

♦ ε.**1** au moins un organosilane alcoxylé contenant, par molécule, au moins un groupe alcényle en $C_2$-$C_6$,
♦ ε.**2** au moins un composé organosilicié comprenant au moins un radical époxy.

L'organosilane alcoxylé (ε.**1**) du promoteur (ε) et plus particulièrement sélectionné parmi les produits de formule générale suivante :

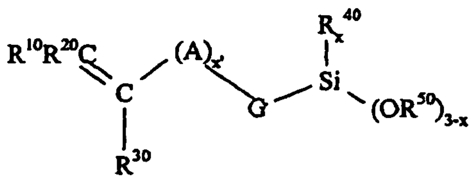

**(ε.1)**

dans laquelle :

- $R^{10}$, $R^{20}$, $R^{30}$ sont des radicaux hydrogénés ou hydrocarbonés identiques ou différents entre eux et représentent, de préférence, l'hydrogène, un alkyle linéaire ou ramifié en $C_1$-$C_4$ ou un phényle éventuellement substitué par au moins un alkyle en $C_1$-$C_3$,
- A est un alkylène linéaire ou ramifié en $C_1$-$C_4$,
- G est un lien valenciel ou l'oxygène,
- $R^{40}$ et $R^{50}$ sont des radicaux identiques ou différents et représentent un alkyle en $C_1$-$C_4$ linéaire ou ramifié,
- x' = 0 ou 1,
- x = 0 à 2, de préférence 0 ou 1 et plus préférentiellement encore 0.

Sans que cela ne soit limitatif, il peut être considéré que le vinyltriméthoxysilane **(VTMO)** est un composé (ε.**1**) particulièrement approprié.

S'agissant du composé organosilicié (ε.**2**), il est prévu conformément à l'invention, de le choisir :

- soit parmi les produits (ε.**2a**)répondant à la formule générale suivante :

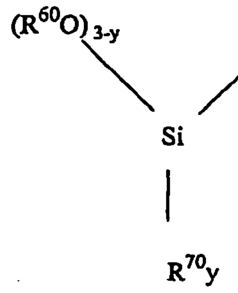

(ε.2a)

dans laquelle :

- $R^{60}$ est un radical alkyle linéaire ou ramifié en C1 - C4,
- $R^{70}$ est un radical alkyle linéaire ou ramifié
- y est égal à 0, 1, 2 ou 3, de préférence à 0 ou 1 et, plus préférentiellement encore à 0,

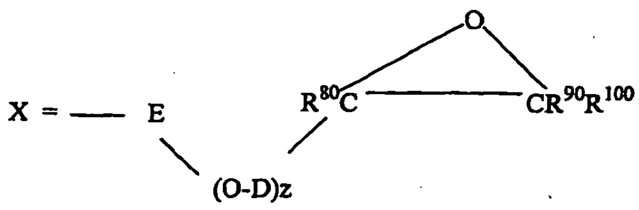

avec:

Δ E et D qui sont des radicaux identiques ou différents choisis parmi les alkyles en $C_1$-$C_4$ linéaires ou ramifiés,
Δ z qui est égal à 0 ou 1,
Δ $R^{80}$, $R^{90}$, $R^{100}$ qui sont des radicaux identiques ou différents représentant l'hydrogène ou un alkyle linéaire ou ramifié en $C_1$-$C_4$, l'hydrogène étant plus particulièrement préféré,
Δ $R^{80}$ et $R^{90}$ ou $R^{100}$ pouvant alternativement constituer ensemble avec les deux carbones porteurs de l'époxy, un cycle alkyle ayant de 5 à 7 chaînons,
- soit parmi les produits (ε.**2b**) constitués par des polydiorganosiloxanes époxyfonctionnels comportant au moins un motif de formule :

Xp Gq SiO (ε.**2 b1**)

dans laquelle :

- X est le radical tel que défini ci-dessus pour la formule (ε.**2a**)
- G est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- p = 1 ou 2,
- q = 0, 1 ou 2,
- p + q = 1, 2 ou 3,

éventuellement au moins une partie des autres motifs de ces polydiorganosiloxanes sont des motifs de formule moyenne :

Gr SiO (ε.**2 b2**)

dans laquelle G a la même signification que ci-dessus et r a une valeur comprise entre 0 et 3, par exemple entre 1 et 3.

Les composés (ε.**2**) sont donc préférentiellement des époxyalcoxysiliciés et plus préférentiellement encore des époxyalcoxymonosilanes (ε.**2a**). A titre d'exemples de tels composés (ε.**2**) on peut citer :

- le 3-glycidoxypropyltriméthoxysilane (GLYMO),
- ou le 3,4-époxycyclohexyléthyltriméthoxysilane.

Selon l'invention, une combinaison avantageuse pour former le promoteur d'adhérence est la suivante :

VTMO/GLYMO

Sur le plan quantitatif, il peut être précisé que les proportions pondérales entre (ε.**1**), (ε.**2**), exprimées en pourcentages en poids par rapport au total des trois, sont les suivantes :

(ε.**1**) $\geq$ 10, de préférence compris entre 15 et 70 et plus préférentiellement encore 25 à 65,
(ε.**2**) $\leq$ 90, de préférence compris entre 70 et 15 et plus préférentiellement encore 65 à 25,
étant entendu que la somme de ces proportions en (ε.**1**), (ε.**2**), est égale à 100 %.

Il est à noter que dans le cas où la composition comprend un allongeur φ, alors l'organosiloxane alcoxylé ε.**1** comprend, de préférence, au moins un groupe alcényle en $C_3$-$C_6$.

L'agent facultatif λ de tenue thermique (à l'état réticulé), peut être par exemple choisi dans le groupe comprenant : $TiO_2$ ( particules de préférence de structure polycristalline majoritairement anatase ou majoritairement rutile, éventuellement traitées en surface et décrites notamment dans la demande de brevet français FR.98 03396, les oxydes de fer ou de Cérium, les sels d'acide organique de métal, e.g. de fer ou de cérium, par exemple l'octoate de fer ou de cérium, le noir de carbone.

Les compositions silicones de l'invention peuvent en outre comprendre des additifs fonctionnels usuels φ. Comme familles d'additifs fonctionnels usuels φ, on peut citer :

- ■ les allongeurs constitués par au moins un POS α,ω ≡SiH,
- ■ les huiles POS hydroxylées utiles comme compatibilisant.
- ■ les neutralisants,
- ■ les colorants,
- ■ les modulateurs d'adhérence,
- ■ les additifs de tenue thermique,
- ■ les additifs pour augmenter la consistance,
- ■ les additifs de tenue thermique, de tenue aux huiles, au feu (par exemple les oxydes métalliques).

Le POS allongeur φ facultatif peut être un.POS présentant des motifs siloxyles terminaux de type : $HR^0{}_2SiO_{1/2}$, avec $R^0$ identique ou différent entre eux et correspondant à un groupement alkyle ou linéaire ou ramifié en $C_1$-$C_6$ et/ou un aryle substitué ou non, $R^0$ étant préférentiellement $CH_3$. Outre ces motifs terminaux, ce POS (φ) est, par ailleurs, un polydiorganosiloxane, de préférence un polydiméthylsiloxane. A titre d'exemples de POS (φ) on peut citer le poly(diméthylsiloxy)-α,ω-(diméthylhydrogénosiloxy)siloxane.

Concernant la préparation de la composition, elle est peut être réalisée selon les manières connues de l'homme de métier. Il est cependant préférable d'ajouter l'inhibiteur de réticulation γ.**2** ainsi que le catalyseur métallique γ.**1** en fin de préparation de la composition et en opérant à température ambiante (23°C).

La présente invention englobe également tout un volet d'application de la composition élastomère silicone adhésive ESA telle que définie ci-dessus réticulable par polyaddition et additionnée d'un système catalytique platine/inhibiteur à base d'alcool α-acétylénique.

Les compositions conformes à l'invention peuvent être employées pour de multiples applications, comme l'assemblage des matériaux les plus divers (métaux, matières plastiques, verre et céramique, composants électroniques) ou le jointoiement dans différents domaines de l'industrie (automobile et transport, électroménager, électrotechnique, électronique) ou encore dans la protection des éléments assemblés.

Pour ce qui est du jointoiement, elles conviennent plus spécialement pour la formation de joints "in-situ" utilisés dans l'industrie. Ces joints "in-situ" englobent plusieurs types, à savoir les joints "flués" également appelés joints écrasés, les joints profilés sur pièce (JPP) également appelés joints en forme et enfin les joints injectés (ou surmoulés).

Les joints "flués" concernent dans l'industrie automobile, des assemblages ne devant pas être couramment

démontés, comme par exemple les étanchéités des moteurs (bloque cylindre, culasse de plaque avant) et boîtes de vitesse. Dans le domaine de l'électroménager, on peut citer l'assemblage de plaques de four, l'assemblage de plaques de cuisson vitrocéramiques et l'assemblage de fer à repasser.

Les joints "profilés sur pièce" (JPP) sont utilisés dans le secteur du transport et de l'automobile, pour des applications d'étanchéité sur toutes les pièces moteur exigeant une démontabilité telles à titre d'exemples, le couvre culasse, pompe à huile, pompe à eau, boîte à eau, carter d'huile, carter de distribution, guide d'embrayage.

Les matériaux constituant ces pièces et sur lesquels les ESA selon l'invention, sont parfaitement adhérents, peuvent être par exemple le verre, l'acier inoxydable, les composants électroniques, la fonte, l'aluminium, la tôle galvanisée, la tôle électrozinguée, la tôle peinte avec peinture cataphorèse, le polyamide, les résines phénoplastes.

Dans le secteur de l'électroménager, différentes applications des ESA selon l'invention peuvent être citées :

- portes de fours électriques ou à gaz,
- portes de fours micro-ondes, ou mixtes,
- les plaques vitrocéramiques,
- les pièces de fers à repasser,
- tambour de machines à laver.

Les applications de ESA selon l'invention, envisageables dans l'industrie électrotechnique et électronique sont :

- revêtements de boîtiers électriques ou électroniques, de circuits imprimés,
- cartes électroniques.

S'agissant de l'assemblage, et hormis l'assemblage de pièces par joint flué tel que décrit ci-dessus, on peut citer des applications de collage surfacique telles le collage de tissus par exemple sur sièges - sellerie - (secteur du transport). Les ESA selon l'invention sont particulièrement adaptées à cette application de par leur bon classement au niveau de la réglementation sécurité feu-fumée, de par son bon niveau de thixotropie qui évite une imprégnation du produit avant réticulation suivi d'un "*tachage*" du tissu et enfin de par son bon niveau d'adhérence sur les supports constituant les assises (acier, inox, polyester, ABS, polycarbonate, velours etc...).

L'ESA monocomposant selon l'invention permet également de réaliser le collage de différentes pièces de sustentation en verre, acier inox et polyamide.

Ainsi, la composition ESA selon l'invention, peut être utilisée, à titre de colle pour l'assemblage d'au moins deux éléments. Un tel procédé d'application est caractérisé en ce qu'il consiste essentiellement à enduire au moins l'un des éléments à assembler une couche de composition selon l'invention, à assembler lesdits éléments en les appliquant les uns contre les autres, et à faire réticuler la colle élastomère, de préférence par chauffage.

Suivant une disposition avantageuse de l'invention, les éléments à assembler sont en nombre de deux.

Selon une autre modalité d'application, l'un des éléments à assembler est un matériau fibreux tissé, tricoté, non tissé à base de fibres naturelles et/ou synthétiques classiques. Il peut s'agir par exemple d'une application de collage de matériau fibreux e.g. textile, notamment dans le cadre de l'activité de sellerie.

Il apparaît donc que les domaines d'application de l'ESA monocomposant de polyaddition, réticulable à chaud selon l'invention sont principalement les collages, assemblages, jointoiements étanches, revêtements, protection, remplissage (*potting*) de manière performante et sûre, dans les secteurs de l'électroménager, de l'électrotechnique, de l'électronique et de l'automobile.

La présente invention concerne enfin une colle, **caractérisée en ce qu'**elle comprend de la composition ESA monocompôsant selon l'invention.

La présente invention sera mieux comprise à la lumière de l'exemple qui suit.

**EXEMPLE :**

**A / FORMULATION ESA**

- POS $\alpha$.**1** : PolyDiMéthylSiloxane PDMS bloqué par des motifs $(CH_3)_2ViSiO_{0,5}$ ayant une viscosité d'environ 100Pa.s et contenant environ 0,0022 fonctions SiVi pour 100 g d'huile ;
- POS $\beta$: poly(diméthyl)(hydrogénométhyl)siloxane, bloqué par des motifs $(CH_3)_2HSiO$ 0,5 ayant une viscosité d'environ 25 mPa.s et contenant au total environ 0,7 fonction SiH pour 100 g d'huile ;
- système catalytique $\gamma$ :

o γ .**1** : platine métal sous la forme d'un complexe métallique, connu sous le nom de catalyseur de Karstedt en solution dans une huile vinylée PDMS titrant 10% en poids de platine métallique ;
o γ .**2** : triméthyl-3,7,11 dodécyne-1 ol-3 (TMDDO) ;

- résine ρ : résine de structure $MM^{Vi}DD^{Vi}Q$ contenant en poids environ 0,6% de groupes vinyles (Vi) et constituée de, en poids environ 17% de $(CH_3)_3SiO_{0,5}$ (motifs M), 0,5% de motifs $(CH_3)_2ViSiO_{0,5}$ (motifs $M^{Vi}$), 75% de motifs $(CH_3)_2SiO$ (motifs D) et 8% de motifs $SiO_2$ (motifs Q) ;
- charge δ.**1** silice de combustion 200 $m^2/g$ traitée par l'octaméthylcyclotétrasiloxane ;
- charge δ.**2** de terre de diatomées de surface spécifique environ 5 $m^2/g$ et caractérisée par son pH voisin de 8 (CELTE® 350) ;
- promoteur ε.**1** : vinyltriméthoxysilane (VTMO) ;
- promoteur ε.**2** : glycidoxypropyltriméthoxysilane (GLYMO) ;
- colorant φ : noir de carbone noir graphtol BLN en dispersion à 15% dans de l'huile PDMS de viscosité 1000 mPa.s.

**B / PREPARATION DE LA FORMULATION ESA**

**1. Prémélange**

On prépare tout d'abord une suspension dénommée prémélange en mélangeant à température ambiante dans un réacteur de capacité environ 2 litres équipé d'une agitation centrale du type « ailes de papillon » (mélangeur planétaire), les ingrédients suivants :

- Résine silicone ρ,
- POS α.1,
- δ.1 silice et δ.2 CELITE® 350,
- colorant φ.

Le tout est homogénéisé pendant environ 50 min à une vitesse de rotation de l'agitateur de 200 T ; la température atteint alors environ 80°C. L'appareil est alors mis sous vide d'environ 25 mm Hg et la vitesse d'agitation est augmentée à 500 T pendant 5 min ; dans cette phase, la température atteint environ 125°C. L'installation est ramenée à pression atmosphérique et on laisse refroidir. L'ensemble est homogénéisé pendant encore 5 à 10 min à environ 350 T. On recueille alors le prémélange ou empâtage qui sert à la formulation du monocomposant ESA sont mis en présence sans agitation.

**2. Formulation ESA**

Dans le même mélangeur que précédemment sont mis en présence sous agitation :

- le prémélange ou empâtage obtenu en 1 supra,
- promoteur ε.1,
- promoteur ε.2,
- POS β.

Et on ajoute ensuite le TMDDO et le catalyseur au platine à la température ambiante.
Le tableau 1 donne la formulation réalisée.

Tableau 1

| **Réactifs(%)** | **Formulation ESA** |
|---|---|
| Résine silicone ρ | 19,65 |
| POS Huile vinylée α.**1** | 41,933 |
| Charge δ.**2** : Celite 350 - | 30,87 |
| Charge δ.**1** : Silice de combustion 200$m^2/g$ traitée par l'octaméthylcyclotétrasiloxane | 1,96 |
| promoteur ε.**1** : Silane VTMO | 0,9 |
| promoteur ε.**2** : Silane GLYMO | 0,9 |

(suite)

| Réactifs(%) | Formulation ESA |
|---|---|
| POS β : Huile ≡Si-H | 3,0 |
| **TMDDO** | 0,287 |
| Catalyseur de Karstedt | 0,01 |
| Agent colorant | 0,49 |

L'ensemble se présente sous la forme d'un élastomère consistant, thixotrope, de couleur noire.

**C/ EVALUATIONS**

**1/ Caractéristiques Rhéologiques**

Coulabilité Boeing S7502 (mm) : 100.

**2/ Cinétique de Réticulation**

On évalue la cinétique de réticulation de la formulation à l'aide du rhéomètre MOSANTO MDR 2000 en travaillant à 150°C. Les résultats sont présentés au tableau 2 :

Tableau 2

| Paramètres mesurés | Valeur |
|---|---|
| T50 (seconde) | **70** |
| T90 (seconde) | **90** |
| Couple maxi (dN.m) | **4,6** |
| Vitesse (dN.m/min) | **18** |

Ces valeurs montrent que la composition monocomposante ESA selon l'invention réticule rapidement à 150°C.

**3/ Propriétés Mécaniques**

Les valeurs typiques des propriétés mécaniques et leurs normes sont représentés au tableau 3. Ces caractéristiques ont été obtenues après réticulation optimale pendant 1 heure à 150°C.

Tableau 3

| 1h à 150 °C | Valeurs Typiques |
|---|---|
| Dureté Shore A<br>(Norme ISO R 868, ASTM D2240) | **55** |
| Résistance à la Rupture (Mpa)<br>(Norme ISO R 37(H2), ASTM D412) | **4,9** |
| Allongement à 1a Rupture (%)<br>(Norme ISO R 37(H2), ASTM D412) | **170** |
| Résistance à la déchirure (N/mm)<br>(Norme ASTM 624 A) | **14** |

**4/ Caractéristiques d'Adhésion et Tenue Thermique**

Il s'agit d'adhésion sur éprouvettes. Les éprouvettes pour le test d'adhésion (norme MNRPS 748 - joint de 1 mm d'épaisseur) ont été réticulées pendant 1 heure à 150°C plus 24 heures de mûrissement à 23°C et 50% humidité relative (Initial). Un vieillissement thermique est effectué à 250°C pendant trois jours pour le collage mixte Verre/Inox.

Les essais ci-dessous ont été effectués sur la formulation ESA monocomposant (tableau 4).

Tableau 4

| **1 h à 150°C** | À l'initial |
|---|---|
| Assemblage | Verre/Inox |
| Cont. Rupture (MPa) (norme MNRPS 748) | **2,7** |
| Cohésion (%) (norme MNRPS 748) | **100** |

**5/ Stabilité**

Après 6 mois de stockage la formule ESA monocomposante n'est pas réticulée et il est encore possible de l'utiliser dans les applications visées.

**Revendications**

**1.** Composition élastomère silicone, adhésive, et réticulable à chaud par polyaddition (hydrosilylation), cette composition étant du type de celles comprenant :

- ♦ $\alpha$/ au moins un PolyOrganoSiloxane (POS) porteur d'insaturation(s) éthylénique(s) et/ou acétylénique(s), {POS à motifs ≡Si-[insaturation]};
- ♦ $\beta$/ au moins un polyorganosiloxane (POS) porteur de motifs ≡Si-H ;
- ♦ $\gamma$/ un système catalytique comportant :
  - ~ $\gamma$.**1** au moins un catalyseur métallique (de préférence à base de platine),
  - ~ $\gamma$.**2** et au moins un inhibiteur de réticulation;
- ♦ $\delta$/ une charge ;
- ♦ $\varepsilon$/ au moins un promoteur d'adhérence ;
- ♦ $\rho$/ au moins une résine POS ;
- ♦ $\lambda$/ éventuellement au moins un agent de tenue thermique ;
- ♦ $\varphi$/ éventuellement au moins un autre additif fonctionnel ;

**caractérisée en ce qu'**elle est monocomposante et ce que l'inhibiteur de réticulation $\gamma$.**2** est sélectionné dans le groupe des alcools $\alpha$-acétyléniques, le ratio molaires métal du catalyseur sur inhibiteur est compris entre 1/50 et 1/1000.

**2.** Composition selon 1a revendication 1, **caractérisée en ce que** l'inhibiteur de réticulation $\gamma$.**2** répond à la formule :

$$R - (R') C (OH) - C \equiv CH \qquad (I)$$

formule dans laquelle :

. R est un radical alkyle linéaire ou ramifié, ou un radical aryle ;
. R' est H ou un radical alkyle linéaire ou ramifié, ou un radical aryle ;

les radicaux R, R' et l'atome de carbone situé en $\alpha$ de la triple liaison pouvant éventuellement former un cycle ;
le nombre total d'atomes de carbone contenu dans R et R' étant d'au moins 4.

**3.** Composition selon 1a revendication 2, **caractérisée en ce que** l'inhibiteur de réticulation $\gamma$.**2** répond à la formule (I) précitée dans laquelle :

. R est un radical alkyle linéaire ou ramifié, ou un radical phényle ;

. R' est H ou un radical alkyle linéaire ou ramifié, ou un radical phényle ;

le nombre total d'atomes de carbone contenu dans R et R' se situant dans l'intervalle allant de 9 à 20.

4. Composition selon la revendication 3, **caractérisée en ce que** l'inhibiteur de réticulation γ.**2** est choisi parmi les alcools α-acétyléniques présentant un point d'ébullition supérieur à 250°C.

5. Composition selon 1a revendication 4, **caractérisée en ce que** l'inhibiteur de réticulation γ.**2** est choisi parmi les alcools α-acétyléniques suivants :

. le méthyl-3 dodécyne-1 ol-3 ;
. le triméthyl-3,7,11 dodécyne-1 ol-3 ;
. le diphényl-1,1 propyne-2 ol-3 ;
. l'éthyl-3 éthyl-6 nonyne-1 ol-3 ;
. le méthyl-3 pentadécyne-1 ol-3.

6. Composition selon l'une quelconque des revendications 1 à 5, **caractérisée en ce que** le catalyseur γ.**1** est un catalyseur au platine.

7. Composition selon l'une quelconque des revendications 1 à 6, **caractérisée en ce qu'**elle comprend :

- α - au moins un POS présentant, par molécule, au moins deux groupes alcényles, en $C_2$-$C_6$ liés au silicium ;
- β - au moins un POS présentant, par molécule, au moins deux atomes d'hydrogène liés au silicium ;
- γ - un système catalytique tel que défini dans les revendications 1 à 6, ε/ un promoteur d'adhérence binaire ;
- δ/ une charge minérale et/ou microsphérique et/ou creuse et/ou inorganique expansée et/ou expansable ;
- ρ / éventuellement au moins une résine POS porteuse de motifs siloxyle T et/ou Q, éventuellement M et/ou D et de motifs siloxyle alcénylés ;
- λ/ éventuellement au moins un additif de tenue thermique ;
- φ/ éventuellement au moins un autre additif fonctionnel.

8. Application de la composition selon l'une quelconque des revendications 1 à 7 pour réaliser des collages, assemblages, jointoiements étanches, revêtements, protection, remplissage (*pocting*), dans les secteurs de l'électroménager, de l'électrotechnique, de l'électronique et de l'automobile.

9. Colle utilisable notamment dans le domaine de l'électronique **caractérisée en ce qu'**elle comprend la composition selon l'une quelconque des revendications 1 à 7.

## Claims

1. Silicone elastomer adhesive composition which can be crosslinked at high temperature by polyaddition (hydrosilylation), this composition being of the type of those comprising:

♦ α/ at least one polyorganosiloxane (POS) bearing one or more ethylenically and/or acetylenically unsaturated groups, {POS having ≡Si-[unsaturation] units};
♦ β/ at least one polyorganosiloxane (POS) bearing =Si-H units;
♦ γ/ a catalyst system comprising:

~ γ.**1** at least one metal catalyst (preferably based on platinum); and
~ γ.**2** at least one crosslinking inhibitor;

♦ δ/ a filler;
♦ ε/ at least one adhesion promoter;
♦ ρ/ optionally at least one POS resin;
♦ λ/ optionally at least one heat stabilizer; and
♦ φ/ optionally at least one other functional additive;

**characterized in that** it is a single-component composition and **in that** the crosslinking inhibitor γ.**2** is chosen from

the group of a-acetylenic alcohols, the molar ratio of the metal of the catalyst to the inhibitor is between 1/50 and 1/1000.

2. Composition according to Claim 1, **characterized in that** the crosslinking inhibitor γ.**2** corresponds to the formula:

R-(R')C(OH)-C≡CH (I)

in which formula:

. R is a linear or branched alkyl radical, or an aryl radical; and
. R' is H or a linear or branched alkyl radical, or an aryl radical;
the R, R' radicals and the carbon atom located at the a position of the triple bond may optionally form a ring; the total number of carbon atoms contained in R and R' being at least 4.

3. Composition according to Claim 2, **characterized in that** the crosslinking inhibitor γ.**2** corresponds to the aforementioned formula (I) in which:

. R is a linear or branched alkyl radical, or a phenyl radical;
. R' is H or a linear or branched alkyl radical, or a phenyl radical;
the total number of carbon atoms contained in R and R' lying in the range going from 9 to 20.

4. Composition according to Claim 3, **characterized in that** the crosslinking inhibitor γ.**2** is chosen from the a-acetylenic alcohols having a boiling point above 250°C.

5. Composition according to Claim 4, **characterized in that** the crosslinking inhibitor γ.**2** is chosen from the following α-acetylenic alcohols:

. 3-methyl-1-dodecyn-3-ol;
. 3,7,11-trimethyl-1-dodecyn-3-ol;
. 1,1-diphenyl-2-propyn-3-ol;
. 3-ethyl-6-ethyl-1-nonyn-3-ol; and
. 3-methyl-1-pentadecyn-3-ol.

6. Composition according to any one of Claims 1 to 5, **characterized in that** the catalyst γ.**1** is a platinum catalyst.

7. Composition according to any one of Claims 1 to 6, **characterized in that** it comprises:

- α - at least one POS having, per molecule, at least two $C_2$-$C_6$ alkenyl groups linked to the silicon;
- β - at least one POS having, per molecule, at least two hydrogen atoms linked to the silicon;
- γ - a catalyst system as defined in claims 1 to 6;
- e/ a binary adhesion promoter;
- δ/ a mineral and/or microsphere and/or hollow and/or expanded and/or expandable inorganic filler;
- ρ/ optionally at least one POS resin bearing T and/or Q, optionally M and/or D siloxyl units and alkenylated siloxyl units;
- λ/ optionally at least one heat stabilizer; and
- φ/ optionally at least one other functional additive.

8. Application of the composition according to any one of Claims 1 to 7, to produce adhesive bonding, joints, sealed joints, coatings, protection, potting in the domestic electrical appliance, electrical engineering, electronics and automotive sectors.

9. Adhesive that can especially be used in the electronics field, **characterized in that** it comprises the composition according to any one of Claims 1 to 7.

**Patentansprüche**

1. Silicon-Elastomer-Zusammensetzung, haftend und in der Wärme durch Polyaddition (Hydrosilylierung) vernetzbar,

wobei diese Zusammensetzung von dem Typ ist, der umfasst:

- ■ α / mindestens ein PolyOrganoSiloxan (POS) als Träger von ethylenischer(n) und/oder acetylenischer(n) Unsättigung(en) {POS mit Struktureinheiten ≡Si-[Unsättigung]};
- ■ β / mindestens ein Polyorganosiloxan (POS) als Träger von Struktureinheiten ≡Si-H;
- ■ γ / mindestens ein katalytisches System, umfassend:
  - γ.1 mindestens einen metallischen Katalysator (vorzugsweise auf der Basis von Platin), und
  - γ.2 mindestens einen Inhibitor der Vernetzung;
- ■ δ / einen Füllstoff;
- ■ ε / mindestens einen Haftungspromotor;
- ■ ρ / mindestens ein Harz POS;
- ■ λ / gegebenenfalls mindestens ein Mittel zur thermischen Beständigkeit;
- ■ φ / gegebenenfalls mindestens einen anderen funktionellen Zusatzstoff,

**dadurch gekennzeichnet, dass** sie als Einkomponenten-Zusammensetzung vorliegt und dass der Inhibitor der Vernetzung γ.2 aus der Gruppe der α-acetylenischen Alkohole gewählt wird, wobei das molare Verhältnis von Metall des Katalysators zu dem Inhibitor zwischen einschließlich 1/50 und 1/1000 beträgt.

**2.** Zusammensetzung nach Anspruch 1, **dadurch gekennzeichnet, dass** der Inhibitor der Vernetzung γ.2 der folgenden Formel entspricht:

$$R\text{-}(R')C(OH)\text{-}C\equiv CH \qquad (I)$$

in der

. R ein linearer oder verzweigter Rest Alkyl oder ein Rest Aryl ist;
. R' Wasserstoff oder ein linearer oder verzweigter Rest Alkyl oder ein Rest Aryl ist;

wobei die Reste R, R' und das Kohlenstoffatom, das sich in α der Dreifachbindung befindet, gegebenenfalls einen Ring bilden können; und die Gesamtanzahl der Kohlenstoffatome, die in R und R' enthalten sind, mindestens 4 beträgt.

**3.** Zusammensetzung nach Anspruch 2, **dadurch gekennzeichnet, dass** der vorstehend genannte Inhibitor der Vernetzung γ.2 der Formel (I) entspricht, in der

. R ein linearer oder verzweigter Rest Alkyl oder ein Rest Phenyl ist;
. R' Wasserstoff oder ein linearer oder verzweigter Rest Alkyl oder ein Rest Phenyl ist;

wobei die Gesamtanzahl der Kohlenstoffatome, die in R und R' enthalten sind, sich in einem Intervall befindet, das von 9 bis 20 reicht.

**4.** Zusammensetzung nach Anspruch 3, **dadurch gekennzeichnet, dass** der Inhibitor der Vernetzung γ.2 unter den α-acetylenischen Alkoholen ausgewählt wird, die einen Siedepunkt von über 250 °C aufweisen.

**5.** Zusammensetzung nach Anspruch 4, **dadurch gekennzeichnet, dass** der Inhibitor der Vernetzung γ.2 unter den folgenden α-acetylenischen Alkoholen ausgewählt wird:

. 3-Methyl-1-dodecin-3-ol;
. 3,7,11-Trimethyl-1-dodecin-3-ol;
. 1,1-Diphenyl-2-propin-3-ol;
. 3-Ethyl-6-ethyl-1-nonin-3-ol;
. 3-Methyl-1-pentadecin-3-ol.

**6.** Zusammensetzung nach irgendeinem der Ansprüche 1 bis 5, **dadurch gekennzeichnet, dass** der Katalysator γ. 1 ein Platinkatalysator ist.

**7.** Zusammensetzung nach irgendeinem der Ansprüche 1 bis 6, **dadurch gekennzeichnet, dass** sie umfasst:

- ■ α / mindestens ein POS, das pro Molekül mindestens zwei Alkenylgruppen mit 2 bis 6 Kohlenstoffatomen aufweist, gebunden an das Silicium;
- ■ β / mindestens ein POS, das pro Molekül mindestens zwei Wasserstoffatome aufweist, gebunden an das Silicium;
- ■ γ / ein katalytisches System, wie in den Ansprüchen 1 bis 6 definiert;
- ■ ε / einen binären Haftungspromotor;
- ■ δ / einen mineralischen und/oder mikrosphärischen und/oder hohlen und/oder anorganischen geschäumten und/oder schäumbaren Füllstoff;
- ■ ρ / gegebenenfalls mindestens ein Harz POS als Träger von Struktureinheiten Siloxyl T und/oder Q, gegebenenfalls M und/oder D und von Struktureinheiten Alkenyl-Siloxyl;
- ■ λ / gegebenenfalls mindestens ein Mittel zur thermischen Beständigkeit;
- ■ φ / gegebenenfalls mindestens einen anderen funktionellen Zusatzstoff.

**8.** Verwendung der Zusammensetzung nach irgendeinem der Ansprüche 1 bis 7 zur Herstellung von Verklebungen, Verbindungen, dichten Verfugungen, Überzügen, Füllungen (potting), auf den Gebieten der elektrischen Haushaltsgeräte, der Elektrotechnik, der Elektronik und der Kraftfahrzeuge.

**9.** Klebstoff, insbesondere anwendbar auf dem Gebiet der Elektronik, **dadurch gekennzeichnet, dass** er die Zusammensetzung nach irgendeinem der Ansprüche 1 bis 7 umfasst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2791994 B
- US 3159601 B
- US 3159602 B
- US 3220972 B
- EP 0057459 A
- EP 0188978 A
- EP 0190530 A
- US 3419593 B
- US 3715334 B
- US 3377432 B
- US 3814730 B
- US 2823218 B
- US 3723497 B
- US 3775452 B
- US 4256870 B
- US 4530989 B
- US 4504645 B
- US 4347346 B
- FR 1126884 A
- FR 1136885 A
- FR 1236505 A
- GB 1024234 A
- WO 9858997 A
- US 3615972 B
- FR 9803396